# EUROPÄISCHE PATENTSCHRIFT

(11) **EP 1 288 673 B1**
(45) Veröffentlichungstag und Bekanntmachung des Hinweises auf die Patenterteilung: **21.03.2007**
(21) Anmeldenummer: 02019018.7
(22) Anmeldetag: 26.08.2002
(51) Int. Cl.: G01S 5/14, H04Q 7/38

(54) **Mobile Navigationsvorrichtung für ein zellulares Funknetz**
Mobile navigation device for a cellular radio network
Dispositif de navigation mobile pour un réseau de radiocommunication cellulaire

(30) Priorität: 29.08.2001 DE 10142156
(43) Veröffentlichungstag der Anmeldung: 05.03.2003
(73) Patentinhaber: Fraunhofer-Gesellschaft zur Förderung der angewandten Forschung e.V., 80686 München (DE)
(72) Erfinder: Hupp, Jürgen, 90425 Nürnberg (DE); Bliesze, Marcus, 91058 Erlangen (DE)
(74) Vertreter: Schoppe, Fritz

(56) Entgegenhaltungen:
- EP-A- 1 109 031
- GB-A- 2 329 801
- BAHL P ET AL: "RADAR: an in-building RF-based user location and tracking system" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, Bd. 2, 26. März 2000 (2000-03-26), Seiten 775-784, XP010376167 ISBN: 0-7803-5880-5

## Beschreibung

Die vorliegende Erfindung bezieht sich auf Zubehörsysteme für zellulare Funknetze und insbesondere auf eine mobile Navigationsvorrichtung für ein zellulares Funknetz.

Aktuell stehen zur Navigation in Gebäuden, die auch als sogenannte Indoor-Environments bezeichnet werden, mit tragbaren Endgeräten, wie z. B. PDAs (PDA = Personal Digital Assistant) Mobiltelephone oder Uhren, nur rudimentäre Konzepte zur Verfügung. Die Navigation in Gebäuden umfaßt die Unterstützung eines mobilen Teilnehmers, wie z. B. eines Roboters, einer Person, eines Fahrzeugs etc., bezüglich der Orientierung, Wegfindung und anderer lokalisierungsbasierender Handlungen in einem Gebäude.

Um diese Unterstützung sinnvoll durchführen zu können, ist es nötig, daß der Teilnehmer möglichst zu jedem Zeitpunkt bzw. an jedem Ort des Gebäudes, also flächendeckend, in der Lage ist, seine Position im Gebäude abzufragen.

Zur Navigation existiert eine Vielzahl von Systemen, von denen das wohl bekannteste das GPS-System sein dürfte. Bekanntermaßen wird bei GPS eine Triangulation über Laufzeitmessungen durchgeführt, um die Position eines Empfängers zu ermitteln. In einem zellularen Funknetz mit fest angeordneten Basisstationen kann eine grobe Orientierung auch dadurch erreicht werden, daß ein Empfänger über die Basisstationsidentifikation der Basisstation, mit der er kommuniziert, feststellt, in welcher Funkzelle er sich befindet.

In WLAN-Systemen wird ferner eine, Off-Line funktionierende einfache Auswertung von Feldstärke-Werten, die auch als RSSI-Werte (RSSI = Radio Signal Strength Indicator) bezeichnet werden, durchgeführt. Eine solche Technik ist in "Geolocation in a PicoRadio Environment", Diploma Thesis, ETH Zürich, Jan Beutel, beschrieben.

Nachteilig an diesen Systemen ist die Tatsache, daß insbesondere bei der Feldstärkemessung die gesamte Problematik des Übertragungskanals, der Mehrfachreflexionen, insbesondere in Gebäuden etc. vorhanden ist, so daß eine genaue Positionsbestimmung nur unter idealisierten Bedingungen mit ausreichender Genauigkeit möglich ist. In realen Szenarien, wie z. B. einem größeren Gebäude, einem Flughafen etc., ist die Positionierung daher sehr ungenau, insbesondere wenn eine Vielzahl von Basisstationen und anderen Funkteilnehmern vorhanden ist.

Das U.S.-Patent Nr. 5,208,756 offenbart ein Fahrzeugpositionierungs- und Navigationssystem, das in Verbindung mit einem zellularen Telefonnetz arbeitet. Ein kleines verstecktes Gerät ist in einem Fahrzeug angeordnet und wird durch ein spezielles Signal von einer Telefonstation aktiviert. Nach der Aktivierung bestimmt das Gerät die Leistung, mit der normal übertragene Steuerkanäle von mehreren Basisstationen des Netzes empfangen werden. Dann berechnet das Gerät den Abstand zwischen dem Fahrzeug und mehreren Basisstationen, um dann unter Verwendung von Triangulationsverfahren oder Arkulationsverfahren die Position des Fahrzeugs zu bestimmen und zurück zu der Telefonstation zu übermitteln, von der das Aktivierungssignal empfangen worden ist.

Die DE 197 03 916 A1 offenbart ein Verfahren zur Prädiktion der Gebäudedämpfung bei Funksignalen, wobei unter Kenntnis der Breite und der Stockwerkhöhe des Gebäudes praktisch für jeden Ort verschiedener Stockwerke die Gebäudedämpfung ermittelbar ist. Bei der Prädiktion der Funkfelddämpfung innerhalb des Gebäudes wird zunächst die Gebäudedämpfung im Erdgeschoß des Gebäudes ermittelt. Dann kann unter Kenntnis der Art der elektromagnetischen Wellenausbreitung und des Geschoßgewinns die jeweilige Funkfelddämpfung an jedem Ort eines beliebigen Stockwerkes des Gebäudes ermittelt werden.

Das U.S.-Patent Nr. 5,657,487 offenbart eine Navigationsassistenz für eine Anrufhandhabung in Mobiltelefonsystemen. Unter Verwendung von Informationen, die von Basisstationen erhalten werden, ist es der Mobilstation möglich, ihren Abstand von jeder Basisstation basierend auf einer mittleren Signalstärke zu approximieren, um damit eine Grobsektorposition zu bestimmen. Informationen von der Basisstation werden von der Mobilstation ferner dazu verwendet, den Ausbreitungsverlust für eine Übertragung zu der Basisstation und den geeigneten Leistungspegel und die geeignete zeitliche Steuerung für Übertragungen zur Basisstation zu bestimmen.

Die EP 1109031 A1 offenbart ein Verfahren und eine Einrichtung zum Lokalisieren eines mobilen Terminals, bei dem zunächst ein Überwachungsbereich definiert wird, in dem Referenzpositionen festgelegt werden, für die eine Referenz-Verbindungsqualität einzeln festgelegt wird. Hier handelt es sich um die Kombination einer Mehrzahl von Empfangsqualitätswerten, welche in bezug auf mindestens drei Basisstationen bestehen. Jeder Referenz-Position werden Kenngrößen zugeordnet, die durch eine Serie von direkten Messungen an den den Referenz-Positionen entsprechenden Orten ermittelt werden. Dann wird eine Übergangswahrscheinlichkeit für jedes Paar von Referenz-Positionen festgelegt. Zum Schluss der Initialisierung wird eine vorgegebene Anzahl der Referenz-Positionen als Startpositionen ausgewählt und mit einer Anfangs-Wahrscheinlichkeit versehen, die wiedergibt, mit welcher Wahrscheinlichkeit sich ein mobiles Terminal zu einem Anfangszeitpunkt bei einer Startposition befindet. Dann ist die Initialisierungsphase beendet, und das mobile Terminal misst seine Verbindungsqualität zwischen seinem Standort und jeder empfangbaren Basisstation. Dann wird eine Distanzbestimmung für jede Referenz-Position durchgeführt. In einem letzten Schritt wird dann für jede Referenz-Position die Wahrscheinlichkeit aktualisiert, dass sich das mobile Terminal nach diesem Lokalisierungszyklus an der Referenz-Position befindet. Aus der aktuellen Menge der wahrscheinlichsten Referenz-Positionen berechnet die Lokalisierungseinheit dann in einem letzten Schritt den geschätzten aktuellen Standort und einen Zuverlässigkeitswert der Schätzung.

Die GB 2329801 A offenbart ein System für die Erfassung der Position einer mobilen Funkstation. Eine Mobilstation misst die Signalstärken einer Mehrzahl von Basisstationen und berichtet sie an eine Kontrollstation. Die Kontrollstation berechnet dann die Position der Mobilstation aus den gemessenen Signalstärken und aus vorherigen Signalstärkenmessungen, die an bekannten Positionen durchgeführt worden sind. Hierbei wird ein Vergleichsverfahren eingesetzt, bei dem Fehler zwischen Signalstärkemessungen an der Mobilposition und Messungen an bekannten Positionen verwendet werden, um eine Distanz von bekannten Positionen zu berechnen. Die Fehler werden dann verglichen, und es werden nur die kleinsten Fehler verwendet, um eine Distanz zu berechnen. Die Position der mobilen Vorrichtung kann als Raum spezifiziert werden. Die Geeignetheit der berechneten Position kann durch Korrelation der berechneten Position mit für einen Benutzer vorgesehenen Bewegungen, einer Langzeit- oder Kurzzeit-Positionshistorie oder einer Berechnung der Bewegungsgeschwindigkeit überprüft werden.

Die Fachveröffentlichung "Radar: An In-Building RF-based User Location and Tracking System", von Paramvir Bahl und Venkata N. Padmanabhan, lnfocom 2000, 19. Annual Joint Conference of the IEEE Computer and Communications Societies, Proceedings, Band 2, 26. März 2000, Seiten 775-784, offenbart eine Lokalisierung von mobilen Stationen durch Aufzeichnen und Verarbeiten von Signalstärkeinformationen an mehreren Basisstationen, die positioniert sind, um eine überlappende Überdeckung des interessierenden Bereichs zu schaffen. Empirische Messungen werden mit Signalausbreitungsmodellen kombiniert, um eine Benutzerposition zu bestimmen. In einem Datenerfassungsschritt werden Informationen über das Radiosignal als Funktion der Benutzerposition aufgezeichnet und in einem verarbeitbaren Tupel-Format aufbereitet. Diese empirisch erfassten Daten werden dann als Suchraum für einen NNSS-Algorithmus verwendet. Alternativ wird eine Raummodellierung mit einem Funkausbreitungsmodell vorgenommen, um die Signalstärke an einem Netz von Positionen zu simulieren anstatt tatsächlich zu messen, um die simulierten Daten dann als Suchraum für den NNSS-Algorithmus zu verwenden.

Die Aufgabe der vorliegenden Erfindung besteht darin, eine mobile Navigationsvorrichtung für ein zellulares Funknetz zu schaffen, die einfach in das zellulare Funknetz integrierbar ist und eine genaue Positionsbestimmung ermöglicht.

Diese Aufgabe wird durch eine mobile Navigationsvorrichtung gemäß Patentanspruch 1 sowie durch ein Verfahren zum Liefern von Navigationsdaten gemäß Patentanspruch 19 gelöst.

Der vorliegenden Erfindung liegt die Erkenntnis zugrunde, daß sich das Konzept der Feldstärkemessung im Gegensatz zur Laufzeitbestimmung wie bei GPS insbesondere in Gebäuden aufgrund einer prinzipiell erreichbaren höheren Genauigkeit gut eignet. Zur Behebung der Probleme der innerhalb eines Gebäudes vorhandenen Übertragungsstreckenkomplexität umfaßt eine erfindungsgemäße mobile Navigationsvorrichtung eine Einrichtung zum Berechnen eines Abstands der mobilen Navigationsvorrichtung von einer oder mehrerer Basisstationen, wobei die Einrichtung zum Berechnen des Abstandes angeordnet ist, um sowohl eine Funkcharakteristik einer Basisstation als auch ein Kanalmodell zu berücksichtigen, das Übertragungseigenschaften für das Funksignal in einer Umgebung der Basisstation beschreibt. In zellularen Funksystemen existieren nicht nur Informationen über die Position einer Basisstation, sondern existieren auch Informationen über die Umgebung der Basisstation, die für die Übertragungseigenschaften relevant sind. Solche Informationen werden erfindungsgemäß in einem Kanalmodell berücksichtigt und umfassen beispielsweise die Stärke einer in der Umgebung der Basisstation angeordneten Wand oder Decke des Gebäudes, Abstände der Basisstation zu Decken, Wänden oder Fußböden, Ausbreitungsparameter der verwendeten Materialien für das Funksignal, etc. Erfindungsgemäß wird ferner die Funkcharakteristik der Basisstation berücksichtigt, wobei diese Funkcharakteristik beispielsweise ein Antennendiagramm der Basisstation sowie die Sendefeldstärke der Basisstation berücksichtigt. Aufgrund der Feldstärkemessung, der SendeFeldstärke und der Antennencharakteristik der Sendeantenne der Basisstation und der durch die mobile Navigationsvorrichtung gemessenen Empfangsfeldstärke kann dann mit hoher Genauigkeit der Abstand der mobilen Navigationsvorrichtung zur sendenden Basisstation ermittelt werden.

Erfindungsgemäß werden daher nicht nur Positionsinformationen einer Basisstation, die ohne weiteres über die Basisstation-Identifikation ermittelt werden können, ausgenutzt, sondern beliebig viele andere Informationen über die Übertragungseigenschaften von Funksignalen in dem Gebäude, in dem Navigationsinformationen ermittelt werden sollen. Diese Informationen können ermittelt werden und der mobilen Navigationsvorrichtung vor einer Positionsbestimmungsaktion bereitgestellt werden.

Ein Vorteil der erfindungsgemäßen mobilen Navigationsvorrichtung besteht darin, daß sie rein passiv arbeiten kann, was bedeutet, daß sie lediglich normale Betriebssignale der Basisstationen eines zellularen Funknetzes empfangen muß, jedoch zur Positionsbestimmung keine eigenen Sendesignale aussenden muß. Dies erzeugt eine leichte Integrierbarkeit in ohnehin an vielen Stellen bereits vorhandenen zellularen Funknetzen, da keinerlei Modifikationen an dem bestehenden zellularen Funknetz an sich durchgeführt werden müssen. Das zellulare Funknetz muß nicht über das Vorhandensein einer Navigationsvorrichtung informiert werden. Diese Eigenschaft führt dazu, daß die mobile Navigationsvorrichtung sehr flexibel einsetzbar ist und ohne Registratur, Anmeldung etc. an Benutzer verteilt werden kann.

Ein weiterer Vorteil der erfindungsgemäßen mobilen Navigationsvorrichtung besteht darin, daß sie ohne Laufzeitmessungen auskommt und auf der Basis der Empfangsfeldstärke unter Verwendung der zur Verfügung gestellten Umgebungsinformationen hinsichtlich der Charakteristika des Funkkanals und der Charakteristika des Senders, d. h. einer Basisstation, eine genaue Positionsbestimmung ermöglicht.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Gebäudeszenario, in dem die mobile Navigationsvorrichtung gemäß der vorliegenden Erfindung einsetzbar ist; und
- Fig. 2: ein Blockdiagramm einer erfindungsgemäßen mobilen Navigationsvorrichtung.

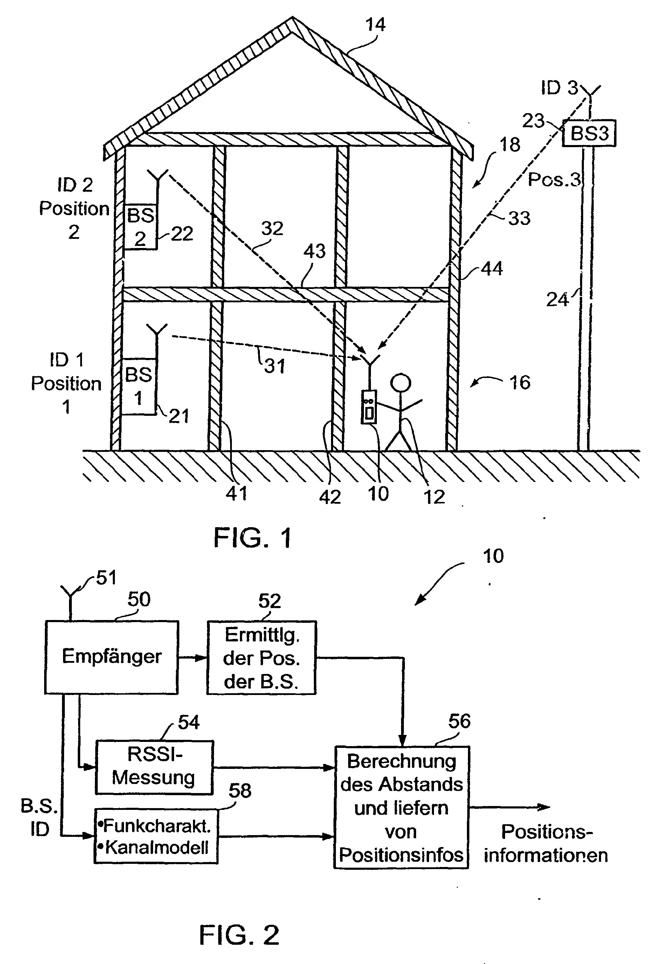

Fig. 1 zeigt ein Gebäudeszenario, in dem eine erfindungsgemäße mobile Navigationsvorrichtung 10, die von einem Benutzer 12 gehalten wird, eingesetzt werden kann. Schematisch ist ein Gebäude 14 mit einem Erdgeschoß 16 und einem ersten Stockwerk 18 dargestellt. In dem Gebäude und dessen Umgebung ist ein zellulares Funknetz installiert, das eine erste Basisstation (BS1) 21, eine zweite Basisstation (BS2) 22 und eine dritte Basisstation (BS3) 23 umfaßt. Die erste Basisstation 21 ist im Erdgeschoß 16 des Gebäudes angeordnet. Die zweite Basisstation 22 ist im ersten Stock des Gebäudes angeordnet, während die dritte Basisstation 23 außerhalb des Gebäudes 14, z. B. auf einem Sendemasten 24, plaziert ist. Die Position jeder Basisstation ist fest vorgegeben. Jede Basisstation umfaßt ferner eine eigene Basisstations-Identifikation (ID1, ID2 bzw. ID3). Zwischen der mobilen Navigationsvorrichtung 10 und der Sendeantenne jeder Basisstation befindet sich ein Übertragungskanal 31, 32 bzw. 33, der in Fig. 1 gestrichelt eingezeichnet ist.

Die Übertragungskanäle 31, 32 und 33 unterscheiden sich aufgrund der Gebäudebeschaffenheit und insbesondere des Grundrisses des Gebäudes 14 folgendermaßen. Der Übertragungskanal 31 von der ersten Basisstation 21 zur mobilen Navigationsvorrichtung umfaßt zwei Innenwände 41, 42 des Gebäudes 14. Der Übertragungskanal 32 von der zweiten Basisstation 22 zur mobilen Navigationsvorrichtung 10 umfaßt dagegen zusätzlich zu den zwei Innenwänden ferner die Decke 43 zwischen dem Obergeschoß 18 und dem Erdgeschoß 16 des Gebäudes. Der Übertragungskanal 33 von der dritten Basisstation 23 zur mobilen Navigationsvorrichtung erstreckt sich dagegen durch die Decke 43 und zusätzlich durch eine Außenwand 44 des Gebäudes. Typischerweise sind die Decke, Innenwände und Außenwände aus unterschiedlichen Materialien konstruiert, welche unterschiedliche Dämpfungseigenschaften für Funksignale haben. Meistens werden Außenwände und Decken aus Stahlbeton gefertigt sein, welcher eine hohe Dämpfung für elektromagnetische Wellen liefert, während Innenwände insbesondere bei Bürobauten zumeist aus Trockenbaumaterialien bestehen, welche lediglich eine geringe Dämpfung für elektromagnetische Wellen aufweisen.

Je nach Anwendungsfall können unterschiedliche Basisstationen unterschiedliche Richtcharakteristika und Sendefeldstärken haben. So könnten die Basisstationen 1 und 2 insbesondere dafür ausgelegt sein, hauptsächlich das jeweilige Stockwerk zu versorgen, weshalb die Sendeantennen der Basisstationen 21 und 22 eine starke Richtwirkung haben dürften, während die Basisstation 3 dafür vorgesehen ist, einen das Gebäude 14 umgebenden Freiraum möglichst gleichmäßig zu "überstreichen", so daß diese Antenne eine schwache Richtcharakteristik haben dürfte und eher dafür vorgesehen ist, ein möglichst rundes Strahlungsdiagramm zu haben. Um hier entsprechende Reichweiten zu erreichen, dürfte die Basisstation 3 mit einer höheren Sendefeldstärke ausgerüstet sein. Erfindungsgemäß werden diese Informationen zur Positionsbestimmung verwendet, wie es nachfolgend erläutert wird.

Fig. 2 zeigt ein Blockdiagramm einer erfindungsgemäßen mobilen Navigationsvorrichtung. Die mobile Navigationsvorrichtung umfaßt einen Empfänger 50 zum Empfangen eines über eine Antenne 51 erhaltenen Funksignals. Das Funksignal stammt von einer Basisstation und enthält typischerweise die Basisstations-Identifikationsnummer, welche dieser Basisstation fest zugeordnet ist. Die Basisstations-Identifikation wird von einer Einrichtung 52 zur Ermittlung der vorgegebenen Position der Basisstation verwendet. Die Einrichtung 52 könnte beispielsweise eine gespeicherte Tabelle haben, in der jeder grundsätzlich zu erwartenden Basisstation Ortskoordinaten bzw. Informationen über die Position der Basisstation, wie z. B. Zimmer 7 im zweiten Stock, an der Außenwand befestigt, umfassen können. Durch einfachen Tabellenzugriff kann die Einrichtung 52 in diesem Fall die Position der Basisstation ermitteln.

Die erfindungsgemäße mobile Navigationsvorrichtung 10 umfaßt ferner eine Einrichtung 54 zur Messung der elektrischen Feldstärke des von der Antenne 51 empfangenen Funksignals. Die Feldstärkewerte des Funksignals sowie die Position der Basisstation werden einer Einrichtung 56 zum Berechnen eines Abstandes der mobilen Navigationsvorrichtung von der Basisstation zugeführt, damit dieselbe unter Verwendung der Position der Basisstation Informationen über die Position der mobilen Navigationsvorrichtung liefern kann. Hierzu hat die Einrichtung 56 Zugriff auf vorzugsweise in einem Speicher 58 gespeicherte Informationen über eine Funkcharakteristik einer betreffenden Basisstation sowie auf Informationen für ein Kanalmodell, das übertragungseigenschaften für das Funksignal in einer Umgebung der Basisstation beschreibt.

Existiert lediglich eine einzige aktive Basisstation in dem zellularen Funknetz, so ist die mobile Navigationsvorrichtung bereits in der Lage, eine grobe Näherung der Position dahingehend zu erreichen, daß lediglich ein bestimmter Sektor existiert, in dem überhaupt Funksignale von der Basisstation empfangen werden können. Dies geschieht dabei aufgrund der Basisstations-Identifikation (ID) und der damit verbundenen Position der Basisstation. Durch Auswertung der Feldstärkeinformationen unter Verwendung der Sendefeldstärke, der Richtcharakteristik, also der Funkcharakteristik der Basisstation, und des Übertragungskanals, kann die erfindungsgemäße mobile Navigationsvorrichtung bereits einen groben Abstand berechnen. Die erfindungsgemäße Navigationsvorrichtung kann dann unter Verwendung z. B. zweier verschiedener Kanalmodelle, die z. B. berücksichtigen, daß entweder eine einzige Innenwand oder zwei Innenwände zwischen dem Empfänger 10 und dem Sender 21 sind, bestimmen, in welchem Zimmer des Erdgeschosses die mobile Navigationsvorrichtung angeordnet ist. Dieses "Durchspielen" verschiedener parametrisierter Kanalmodelle, wobei der Parameter hier beispielsweise die Anzahl und/oder das Material der Innenwände ist, verbunden mit einer Plausibilitätsüberprüfung und unter Umständen bereits vorliegender Historienwerte ermöglicht daher bereits mit einer einzigen Basisstation eine relativ genaue Positionsbestimmung oder zumindest eine Positionsbereichsangabe bezüglich der Basisstation.

Empfängt der mobile Empfänger Signale von mehreren Basisstationen, deren Position und Charakteristika sowie deren verschiedene Kanalmodelle 31-33 (Fig. 1) der mobilen Navigationsvorrichtung bekannt sind, ist eine noch genauere Positionsbestimmung möglich. Unter Verwendung der Funkcharakteristika von z. B. drei Basisstationen und unter Verwendung verschiedener Kanalmodelle wieder mit der Anzahl der Innenwände bzw. einer Decke oder Außenwand als Parameter in Verbindung mit einer Plausibilitätsprüfung kann die Position der mobilen Navigationsvorrichtung bereits wesentlich genauer bestimmt werden.

Dies wird anhand des nachfolgenden Beispiels näher erläutert. Empfängt der Empfänger 10 von Fig. 1 Funksignale der Basisstationen 21-23, so wird er zunächst die Basisstations-Identifikationen ermitteln und dann, auf der Basis der Basisstations-Identifikationen die Funkcharakteristika der drei Basisstationen, von denen er Funksignale empfängt, herausfinden. Der Empfänger könnte dann beispielsweise für die Basisstation ein Kanalmodell zugrunde legen, das lediglich eine Innenwand umfaßt. Für die Basisstation 2 könnte er ein Kanalmodell zugrunde legen, das lediglich eine Innenwand und eine Decke umfaßt. Dies würde bedeuten, daß sich die mobile Navigationsvorrichtung im mittleren Raum des Erdgeschosses 16 des Gebäudes 14 von Fig. 1 befinden würde. Obgleich das empfangene Signal der Basisstation 2 im Vergleich zum Signal der Basisstation 1 als zu schwach identifiziert werden würde, sei aus Darstellungsgründen angenommen, daß dieser Unterschied noch nicht an der Plausibilitätsgrenze scheitert. Bei der Auswertung des Signals von der Basisstation 3 wird die Navigationsvorrichtung jedoch feststellen, daß die empfangene Feldstärke für ein Modell einer Außenwand, einer Innenwand und einer Decke, das zutreffen würde, wenn sich die mobile Navigationsvorrichtung im mittleren Raum des Erdgeschosses befinden würde, zu stark ist. Eine Plausibilitätsüberprüfung wird daher zu dem Ergebnis kommen, daß sich die mobile Navigationsvorrichtung nicht im mittleren Raum des Erdgeschosses befinden kann. Unter Verwendung der Grundrißinformationen des Gebäudes wird daher als nächster Schritt eine Kanalmodell-Situation berücksichtigt, bei der sich der Benutzer, wie in Fig. 1 gezeichnet, im rechten Raum des Erdgeschosses 16 befindet. Hier wird die mobile Navigationsvorrichtung eine sinnvolle plausible Übereinstimmung der drei Empfangssignale von den drei Basisstationen feststellen, so daß eine Abstands-Auswertung und anschließende Positionsbestimmung beispielsweise durch Triangulationsverfahren, durchgeführt werden kann.

Das oben beschriebene Beispiel macht deutlich, daß das Vorliegen parametrisierter Kanalmodelle in Verbindung mit einer schrittweisen Plausibilitätsüberprüfung auf der Basis von Gebäude-Grundrißdaten zunächst eine Groborientierung des Benutzers 12 ermöglicht, um dann auf der Basis der Groborientierung eine Fein-Lokalisation in dem mittels der Groborientierung herausgefundenen Raum zu erreichen. Eine abschließende Plausibilitätskontrolle kann schließlich sicherstellen, daß kein nicht-möglicher Wert berechnet worden ist. Der Benutzer 12 kann sicher nicht außerhalb des rechten oder linken Raums des Obergeschosses 18 stehen, sondern er kann, falls er außerhalb des Gebäudes 14 angeordnet ist, nur am Erdboden sein, jedoch nicht in der "Luft" stehen.

Bei einem bevorzugten Ausführungsbeispiel der vorliegenden Erfindung umfaßt die mobile Navigationsvorrichtung neben dem Empfängersystem 50 zur Erfassung der Basisstations-Identifikation und zur RSSI-Datenerfassung, um alle zu einem Zeitpunkt empfangbaren Signale von einzelnen Basisstationen zu umfassen, auch eine sogenannte RSSI-Smoothing-Einheit in der Einrichtung 56, welche die gemessenen RSSI-Werte algorithmisch unter Verwendung der Basisstationsparameter, mathematischer Kanalmodelle, Grundrißdaten des Gebäudes und durch die Auswertung parametrisierter Umgebungsdaten des Gebäudes korrigiert.

Die mobile Navigationsvorrichtung ist vorzugsweise in einem tragbaren Endgerät, d. h. einem PDA, einem Mobiltelephon, einem Notebook, einer Uhr etc. angeordnet, um die Positionierungsalgorithmen, die Navigationsfunktionalität und vorzugsweise eine Ausgabe in Form von Sprache oder Graphik der Ergebnisse und Hilfestellungen für einen Benutzer zu liefern, wobei die mobile Navigationsvorrichtung ferner eine Eingabeschnittstelle aufweist, damit der Benutzer spezielle Fragen an die mobile Navigationsvorrichtung richten kann.

Die Einrichtung 56 zum Berechnen umfaßt ferner ein Modul, um die Distanzen aus den vorzugsweise optimierten RSSI-Meßwerten zu berechnen.

Die mobile Navigationsvorrichtung umfaßt ferner vorzugsweise ein Positionierungsmodul, welches durch Verwendung angepaßter rekursiver und heuristischer Verfahren, wie z. B. unter Verwendung eines Kalman-Filters, kontinuierlich eine Positionsberechnung durchführt.

Ein Optimierungsmodul, welches auf der Basis logischer Auswertungen der Grundrißdaten und daraus resultierenden Plausibilitätsprüfungen des Gebäudes arbeitet, trägt zu einer weiteren Optimierung der im Positionierungsmodul ermittelten Position bei. Schließlich kann erfindungsgemäß ein weiteres Modul vorgesehen sein, welches durch Verwendung der optimierten Position des Benutzers die von einem Benutzer angeforderten Hilfestellung erzeugt und an den Benutzer in Sprache, graphisch etc. ausgibt.

Die erfindungsgemäße mobile Navigationsvorrichtung kann dadurch ergänzt werden, daß für die benötigten Umgebungsdaten hinsichtlich der Kanalmodelle eine eigene Infrastruktur von Referenzsendern, Sensorik und anderen externen Informationsquellen bereitgestellt wird. Diese zusätzliche Infrastruktur kann dazu verwendet werden, die mobile Navigationsvorrichtung ständig zu aktualisieren, um einen adaptiven Betrieb der Navigationsvorrichtung in verschiedenen Umgebungen zu ermöglichen. Die Adaptivität ist einerseits dann sinnvoll, wenn Veränderungen an einem Gebäude stattfinden. Die Adaptivität ist jedoch dann von wesentlicher Bedeutung, wenn die mobile Navigationsvorrichtung universell für verschiedenen Umgebungen benutzt werden soll. So wird es irgendwann an Speicherressourcen mangeln, wenn Umgebungsdaten bzw. Kanalmodelle für nicht nur einen einzigen Flughafen, sondern für mehrere Flughäfen bzw. Hotels eingespeist werden sollen. In diesem Fall wird es bevorzugt, einen eigenen Referenzsender bereitzustellen, der ständig Kanalparameter erzeugt und überträgt, damit eine mobile Navigationsvorrichtung, die in den Bereich des Senders kommt, diese übertragenen Daten abspeichern kann, um für eine neue Umgebung mit Umgebungsdaten gerüstet zu sein.

Die adaptive Funktionalität ermöglicht ferner, wenn sie in ein und demselben System angewendet wird, eine noch genauere Ermittlung der Distanz der mobilen Navigationsvorrichtung von verschiedenen Basisstationen und führt damit zu einer Erhöhung der Stabilität des Systems und der Positionsgenauigkeit.

Eine zusätzliche Durchführung statistischer Auswertungen der ermittelten RSSI-Daten führt ebenfalls zu einer Erhöhung der Genauigkeit.

Ferner wird es bevorzugt, zumindest zwei Antennen an der mobilen Navigationsvorrichtung anzubringen, um durch das erreichte Antennen-Diversity gegenüber Mehrwegeausbreitungen bzw. konstruktiven und destruktiven Interferenzen unempfindlicher zu sein, was ebenfalls in einer genaueren und zuverlässigeren Bestimmung der RSSI-Werte resultieren wird.

Die mobile Navigationsvorrichtung kann ferner um einen Kompaß ergänzt werden, um die räumliche Orientierung des Benutzers zu verbessern.

Wird in der mobilen Kommunikationsvorrichtung ferner ein zusätzliches inertiales Sensor-System beispielsweise mit Geschwindigkeits- oder Beschleunigungssensoren, eingesetzt, die auf spezielle Applikationen, wie z. B. Laufen, Fahren, etc., angepaßt sind, so ermöglicht dies eine ebenfalls optimierte Positions- und Orientierungsbestimmung. Insbesondere muß dann eine Grob-Positionierung, wie sie vorstehend beschrieben worden ist, seltener durchgeführt werden, da ausgehend von einer ersten Positionsbestimmung, unter Verwendung der Beschleunigungssensoren der weitere Weg der mobilen Navigationsvorrichtung gewissermaßen ohne Hilfe des zellularen Funknetzes bestimmt wird, und nur ab und an zur Verifikation der Daten wieder Basisstations-Funksignale empfangen und ausgewertet werden. Das "bordeigene" Sensor-system leistet auch eine Navigationsmöglichkeit, wenn in einem Gebäude keine ausreichende Funkfeldstärke vorhanden ist, beispielsweise aufgrund von destruktiven Interferenzen. In einem solchen Fall kann das eigene Navigationssystem verwendet werden. Es muß also nicht in jedem Fall auf die Navigation mittels Telefonsignal vertraut werden. Damit kann insgesamt die Genauigkeit des Systems verbessert werden.

Um die Vielseitigkeit und Flexibilität zu verbessern, wird es ferner bevorzugt, nicht nur einem Empfänger für ein zellulares Funksystem, wie z. B. das DECT-System oder ein DECT-Derivat bereitzustellen, sondern auch für andere Systeme, wie z. B. WLAN, Bluetooth. Damit kann die Flächendeckung des Navigationssystems und die Genauigkeit der Positionsbestimmung verbessert werden. Diese Funktionalität ermöglicht es einem Benutzer ferner, seine mobile Navigationsvorrichtung nicht nur in einem DECT-System zu verwenden, sondern auch in beliebigen anderen Systemen, was besonders für Reisende von Vorteil sein dürfte.

Ein wesentlicher Vorteil des erfindungsgemäßen Konzepts besteht darin, daß eine rein passive Realisierung ermöglicht und bevorzugt wird. Es wird also keine Subskription, Anmeldung etc. am Netzwerk notwendig. Dadurch lassen sich insbesondere vorhandene Systeme, wie z. B. DECT-Telephonanlagen in Bürogebäuden, Flughäfen etc., ohne technische Erweiterung verwenden. Mobile Systeme mit Positionsbestimmung lassen sich daher einfach ohne Administrationsaufwand der Telephonanlage in das System einbringen und betreiben. Durch das passive Verhalten entstehen ferner keine störenden Einflüsse auf die Funktionalität und Verfügbarkeit der Funktelephonanlage.

Das erfindungsgemäße Konzept zeichnet sich ferner durch seine Parametrisierbarkeit unter Verwendung von Kanalmodellen, Basisstationsinformationen bzw. Umgebungsinformationen als Parameter, aus und ist an unterschiedliche Umgebungen adaptierbar bzw. dynamisch vor Ort nachladbar.

Besonders günstig kann das erfindungsgemäße Konzept in synchronen Netzwerken, wie z. B. einem zellulären DECT-Netzwerk eingesetzt werden, da RSSI-Werte zu verschiedenen Basisstationen nahezu simultan gemessen werden können, da ein DECT-Frame lediglich 10 ms umfaßt, wobei in diesem 10 ms-Frame sämtliche Basisstationen senden. Eine genaue Positionsbestimmung ist in einem solchen synchronen Netzwerk daher auch für eine sich relativ zügig bewegende mobile Navigationsvorrichtung möglich. Die zeitliche Auflösung der mobilen Navigationsvorrichtung ist in synchronen Netzwerken daher besonders gut, da die feste Beziehung der Sendeeigenschaften des Basisstationen zueinander ausgenutzt werden kann.

Die mobile Navigationsvorrichtung kann z. B. in einem PDA untergebracht werden. Dieser wird mit einer DECT-PCMCIA-Einsteckkarte erweitert. Damit können durch das DECT-Modul die Basisstationen und die dazugehörigen RSSI-Werte ermittelt werden. Eine Treiber-Software kann dann sämtliche weiteren Einrichtungen, die in Fig. 2 gezeigt sind, in Verbindung mit dem Prozessor des PDA realisieren, und kann ferner eine Visualisierungsoberfläche liefern, auf der auf Anfrage Positionsdaten zur Verfügung gestellt werden können. Als Eingabeparameter verwendet die Treiber-Software Informationen über die Basisstationen, die Umgebung und weitere Konfigurationsdaten. Damit existiert ein Führungs- oder Informationssystem, das die mobile Kommunikationsvorrichtung gemäß der vorliegenden Erfindung umfaßt, welches preisgünstig ist, flexibel einsetzbar ist und genaue Informationen liefert.

## Patentansprüche

1. Mobile Navigationsvorrichtung für ein zellulares Funknetz, das in und/oder um ein Gebäude (14) herum angeordnet ist und zumindest eine Basisstation (21, 22, 23) mit einer Basisstation-Identifikation (ID1, ID2, ID3) aufweist, wobei die Basisstation an einer vorgegebenen Position angeordnet ist, mit folgenden Merkmalen:
einem Empfänger (50) zum Empfangen eines Funksignals mit einer elektrischen Feldstärke, das die Basisstations-Identifikation aufweist;
einer Einrichtung (52) zum Ermitteln der vorgegebenen Position der Basisstation aufgrund der Basisstations-Identifikation;
einer Einrichtung (54) zum Messen der Feldstärke des Funksignals;
einer Einrichtung (56) zum Berechnen eines Abstandes der mobilen Navigationsvorrichtung von der Basisstation, um unter Verwendung der vorgegebenen Position der Basisstation Informationen über die Position der mobilen Navigationsvorrichtung zu erhalten,
wobei die Einrichtung (56) zum Berechnen des Abstandes ausgebildet ist, um eine Funkcharakteristik der Basisstation, Informationen über einen Grundriß des Gebäudes und eine Mehrzahl von Kanalmodellen (58), die Übertragungseigenschaften für das Funksignal in einer Umgebung der Basisstation für unterschiedliche Positionen der mobilen Navigationsvorrichtung bezüglich des durch den Grundriß definierten Gebäudes beschreiben, bei der Berechnung des Abstandes zu berücksichtigen, und
wobei die Einrichtung (56) zum Berechnen des Abstandes ferner ausgebildet ist, um unter Verwendung eines ersten Kanalmodells der Mehrzahl von Kanalmodellen eine erste Position bezüglich des Gebäudes zu bestimmen, um unter Verwendung eines zweiten Kanalmodells der Mehrzahl von Kanalmodellen eine zweite Position bezüglich des Gebäudes zu bestimmen, und um aufgrund einer Plausibilitätsüberprüfung der ersten und der zweiten Position einen Raum bezüglich des Grundrisses des Gebäudes zu bestimmen, in dem sich die mobile Navigationsvorrichtung befindet.

2. Mobile Navigationsvorrichtung nach Anspruch 1,
bei der die Mehrzahl von Kanalmodellen (58) Ausbreitungseigenschaften für das Funksignal in einem Material berücksichtigen, das das Gebäude aufweist.

3. Mobile Navigationsvorrichtung nach Anspruch 1 oder 2, bei der das zellulare Funknetz eine Mehrzahl von Basisstationen (21, 22, 23) aufweist, wobei jede Basisstation an einer vorgegebenen Position angeordnet ist und eine eigene Basisstations-Identifikation aufweist, und
wobei die mobile Navigationsvorrichtung ferner einen Speicher aufweist, in dem die vorgegebene Position der Basisstation in Zuordnung zu der Basisstations-Identifikation jeder Basisstation gespeichert ist, und
bei der die Einrichtung (56) zum Berechnen angeordnet ist, um unter Verwendung von Funksignalen der Mehrzahl von Basisstationen Ortskoordinaten der Navigationsvorrichtung zu berechnen.

4. Mobile Navigationsvorrichtung nach einem der vorhergehenden Ansprüche,
bei der die Funkcharakteristik (58) ein Antennendiagramm und eine Sendefeldstärke der Basisstation aufweist.

5. Mobile Navigationsvorrichtung nach einem der vorhergehenden Ansprüche,
bei der das zellulare Funknetz ein synchrones Funknetz ist, bei dem vorhandene Basisstationen in einer festen Beziehung hinsichtlich der Zeit und/oder der Frequenz zueinander stehen, und
bei der der Empfänger (50) angeordnet ist, um in Kenntnis der festen Beziehung Funksignale der Basisstationen zu empfangen.

6. Mobile Navigationsvorrichtung nach Anspruch 5, bei der das zellulare Funknetz ein Funknetz gemäß dem DECT-Standard oder einem Derivat desselben ist.

7. Mobile Navigationsvorrichtung nach einem der Ansprüche 2 bis 6,
bei der die Mehrzahl von Kanalmodellen parametrisiert sind, wobei ein Parameter eine Anzahl und/oder ein Material von Innenwänden des Gebäudes ist.

8. Mobile Navigationsvorrichtung nach einem der vorhergehenden Ansprüche,
die ferner ein Positionierungsmodul aufweist, das unter Verwendung von rekursiven und/oder heuristischen Verfahren eine kontinuierliche Positionsberechnung durchführt.

9. Mobile Navigationsvorrichtung nach Anspruch 8,
bei der das Positionierungsmodul ein Kalman-Filter aufweist.

10. Mobile Navigationsvorrichtung nach einem der Ansprüche 2 bis 9, die ferner ein Optimierungsmodul aufweist, das angeordnet ist, um unter Verwendung der Grundrißdaten des Gebäudes (14) eine Plausibilitätsüberprüfung der Informationen über die Position der mobilen Navigationsvorrichtung durchzuführen.

11. Mobile Navigationsvorrichtung nach einem der vorhergehenden Ansprüche, die ferner eine Schnittstelle für einen Benutzer aufweist, um unter Verwendung der Informationen über die Position der mobilen Navigationsvorrichtung Hilfsinformationen für den Benutzer zu erzeugen und auszugeben.

12. Mobile Navigationsvorrichtung nach einem der vorhergehenden Ansprüche,
bei der der Empfänger (50) eine Mehrzahl von Antennen aufweist, und
bei der die Einrichtung (56) zum Berechnen des Abstandes angeordnet ist, um über die Mehrzahl von Antennen empfangene Funksignale derselben Basisstation zu verwenden.

13. Mobile Navigationsvorrichtung nach einem der vorhergehenden Ansprüche,
bei der das zellulare Funknetz angeordnet ist, um über zumindest einen Referenzsender der mobilen Navigationsvorrichtung Informationen über eine Funkstrecke von einer Basisstation zu der Navigationsvorrichtung zur Verfügung zu stellen, und
bei der der Empfänger (50) angeordnet ist, um die Informationen zu empfangen, und
bei der die Einrichtung (56) zum Berechnen die Informationen berücksichtigt.

14. Mobile Navigationsvorrichtung nach einem der vorhergehenden Ansprüche, die ferner einen Beschleunigungssensor aufweist, und
bei der die Einrichtung zum Berechnen (56) angeordnet ist, um bei den Informationen über die Position ein Ausgangssignal des Beschleunigungssensors zu berücksichtigen.

15. Mobile Navigationsvorrichtung nach einem der vorhergehenden Ansprüche,
die ferner einen Kompaß aufweist.

16. Mobile Navigationsvorrichtung nach einem der vorhergehenden Ansprüche,
bei der der Empfänger (50) angeordnet ist, um Funksignale von zumindest zwei zellularen Funknetzen, die nach einer unterschiedlichen Spezifikation arbeiten, zu empfangen.

17. Mobile Navigationsvorrichtung nach einem der vorhergehenden Ansprüche, die angeordnet ist, um rein passiv ohne Aussendung eigener Funksignale zu arbeiten.

18. Mobile Navigationsvorrichtung nach einem der vorhergehenden Ansprüche, wobei die Funkcharakteristik der Basisstation und die Kanalmodelle in der mobilen Navigationsvorrichtung gespeichert sind oder mittels einer Datenübertragungsschnittstelle adaptiv zur Verfügung gestellt werden.

19. Verfahren zum Liefern von Navigationsinformationen in einem zellularen Funknetz, das in und/oder um ein Gebäude (14) herum angeordnet ist und das zumindest eine Basisstation (21, 22, 23) mit einer Basisstation-Identifikation (ID1, ID2, ID3) aufweist, wobei die Basisstation an einer vorgegebenen Position angeordnet ist, mit folgenden Schritten:
Empfangen (50) eines Funksignals mit einer elektrischen Feldstärke, das die Basisstations-Identifikation aufweist;
Ermitteln (52) der vorgegebenen Position der Basisstation aufgrund der Basisstations-Identifikation;
Messen (54) der Feldstärke des Funksignals;
Berechnen (56) eines Abstandes der mobilen Navigationsvorrichtung von der Basisstation, um unter Verwendung der vorgegebenen Position der Basisstation Informationen über die Position der mobilen Navigationsvorrichtung zu erhalten,
wobei eine Funkcharakteristik der Basisstation, Informationen über einen Grundriß des Gebäudes und eine Mehrzahl von Kanalmodellen, die Übertragungseigenschaften für das Funksignal in einer Umgebung der Basisstation für unterschiedliche Positionen der mobilen Navigationsvorrichtung bezüglich des durch den Grundriß definierten Gebäudes beschreiben, im Schritt des Berechnens des Abstandes berücksichtigt werden, wobei die Funkcharakteristik der Basisstation und das Kanalmodell vorgegeben sind, und
wobei im Schritt des Berechnens unter Verwendung eines ersten Kanalmodells der Mehrzahl von Kanalmodellen eine erste Position bezüglich des Gebäudes bestimmt wird, wobei unter Verwendung eines zweiten Kanalmodells der Mehrzahl von Kanalmodellen eine zweite Position bezüglich des Gebäudes bestimmt wird, und wobei aufgrund einer Plausibilitätsüberprüfung der ersten und der zweiten Position ein Raum bezüglich des Grundrisses des Gebäudes bestimmt wird, in dem sich die mobile Navigationsvorrichtung befindet.

## Claims

1. A mobile navigation device for a cellular radio network arranged within and/or around a building (14) and comprises at least one base station (21, 22, 23) having a base-station identification (ID1, ID2, ID3), the base station being arranged at a predefined position, the mobile navigation device comprising:
a receiver (50) for receiving a radio signal having an electrical field strength and having the base-station identification;
a means (52) for determining the predefined position of the base station on the basis of the base-station identification;
a means (54) for measuring the field strength of the radio signal;
a means (56) for calculating a distance of the mobile navigation device from the base station to obtain information about the position of the mobile navigation device using the predefined position of the base station,
the means (56) for calculating the distance being configured to take into account, when calculating the distance, a radio characteristic of the base station, information about a floor plan of the building and a plurality of channel models (58) which describe transmission properties for the radio signal within an environment of the base station for different positions of the mobile navigation device with regard to the building defined by the floor plan, and
the means (56) for calculating the distance further being configured to determine a first position with regard to the building using a first channel model of the plurality of channel models, to determine a second position with regard to the building using a second channel model of the plurality of channel models, and to determine, on the basis of a plausibility check made on the first and second positions, a room with regard to the floor plan of the building, within which the mobile navigation device is located.

2. The mobile navigation device as claimed in claim 1, wherein the plurality of channel models (58) take into account propagation properties for the radio signal within a material included in the building.

3. The mobile navigation device as claimed in claim 1 or 2, wherein the cellular radio network comprises a plurality of base stations (21, 22, 23), each base station being arranged at a predefined position and having its own base-station identification, and
wherein the mobile navigation device further includes a memory wherein the predefined position of the base station is stored in association with the base-station identification of each base station, and
wherein the means (56) for calculating is arranged to calculate position coordinates of the navigation device using radio signals of the plurality of base stations.

4. The mobile navigation device as claimed in any of the previous claims,
wherein the radio characteristic (58) comprises an antenna pattern and a transmit field strength of the base station.

5. The mobile navigation device as claimed in any of the previous claims,
wherein the cellular radio network is a synchronous radio network wherein existing base stations have specified relations with one another with regard to time and/or frequency, and
wherein the receiver (50) is arranged to receive radio signals of the base stations while knowing the specified relation.

6. The mobile navigation device as claimed in claim 5,
wherein the cellular radio network is a radio network in accordance with the DECT standard or a derivative of same.

7. The mobile navigation device as claimed in any of claims 2 to 6,
wherein the plurality of channel models are parameterized, a parameter being a number and/or a material of internal walls of the building.

8. The mobile navigation device as claimed in any of the previous claims,
further comprising a positioning module which performs a continuous position calculation using recursive and/or heuristic methods.

9. The mobile navigation device as claimed in claim 8,
wherein the positioning module comprises a Kalman filter.

10. The mobile navigation device as claimed in any of claims 2 to 9, further comprising an optimization module arranged to perform a plausibility check made on the information about the position of the mobile navigation device while using the floor-plan data of the building (14).

11. The mobile navigation device as claimed in any of the previous claims, further comprising an interface for a user to generate and output auxiliary information for the user while using the information about the position of the mobile navigation device.

12. The mobile navigation device as claimed in any of the previous claims,
wherein the receiver (50) has a plurality of antennas, and
wherein the means (56) for calculating the distance is arranged to use radio signals of the same base station which have been received via the plurality of antennas.

13. The mobile navigation device as claimed in any of the previous claims,
wherein the cellular radio network is arranged to make available information about a radio link from a base station to the navigation device to the mobile navigation device via at least one reference transmitter, and
wherein the receiver (50) is arranged to receive the information, and
wherein the means (56) for calculating takes the information into account.

14. The mobile navigation device as claimed in any of the previous claims, further comprising an acceleration sensor, and
wherein the means for calculating (56) is arranged to take into account, in the information about the position, an output signal of the acceleration sensor.

15. The mobile navigation device as claimed in any of the previous claims,
further comprising a compass.

16. The mobile navigation device as claimed in any of the previous claims,
wherein the receiver (50) is arranged to receive radio signals from at least two cellular radio networks operating in accordance with different specifications.

17. The mobile navigation device as claimed in any of the previous claims, arranged to work in a purely passive manner without sending out radio signals of its own.

18. The mobile navigation device as claimed in any of the previous claims, the radio characteristic of the base station and the channel models being stored within the mobile navigation device or being adaptively made available by means of a data transmission interface.

19. A method of providing navigation information within a cellular radio network arranged within and/or around a building (14) and comprises at least one base station (21, 22, 23) having a base-station identification (ID1, ID2, ID3), the base station being arranged at a predefined position, the method comprising:
receiving (50) a radio signal having an electrical field strength and having the base-station identification;
determining (52) the predefined position of the base station on the basis of the base-station identification;
measuring (54) the field strength of the radio signal;
calculating (56) a distance of the mobile navigation device from the base station to obtain information about the position of the mobile navigation device using the predefined position of the base station,
wherein a radio characteristic of the base station, information about a floor plan of the building and a plurality of channel models which describe transmission properties for the radio signal within an environment of the base station for different positions of the mobile navigation device with regard to the building defined by the floor plan are taken into account, when calculating the distance, the radio characteristic of the base station as well as the channel model being predefined, and
wherein the step of calculating includes determining a first position with regard to the building using a first channel model of the plurality of channel models, wherein a second position with regard to the building is determined using a second channel model of the plurality of channel models, and wherein a room with regard to the floor plan of the building, within which the mobile navigation device is located, is determined on the basis of a plausibility check made on the first and second positions.

## Revendications

1. Dispositif de navigation mobile pour un réseau de radiocommunication cellulaire qui est disposé dans et/ou autour d'un bâtiment (14) et qui présente au moins une station de base (21, 22, 23) avec une identification de station de base (ID1, ID2, ID3), la station de base étant disposée en une position prédéterminée, aux caractéristiques suivantes :
un récepteur (50) destiné à recevoir un signal radioélectrique avec une intensité de champ électrique qui présente l'identification de station de base ;
un dispositif (52) destiné à déterminer la position prédéterminée de la station de base sur base de l'identification de station de base ;
un dispositif (54) destiné à mesurer l'intensité de champ du signal radioélectrique ;
un dispositif (56) destiné à calculer une distance du dispositif de navigation mobile par rapport à la station de base, pour obtenir, à l'aide de la position prédéterminée de la station de base, des informations sur la position du dispositif de navigation mobile,
le dispositif (56) destiné à calculer la distance étant réalisé de manière à tenir compte, lors du calcul de la distance, d'une caractéristique de radiocommunication de la station de base, d'informations sur un plan horizontal du bâtiment et d'une pluralité de modèles de canal (58) qui décrivent les propriétés de transmission du signal radioélectrique dans les environs de la station de base pour différentes positions du dispositif de navigation mobile par rapport au bâtiment défini par le plan horizontal, et
le dispositif (56) destiné à calculer la distance étant réalisé, par ailleurs, de manière à déterminer, à l'aide d'un premier modèle de canal de la pluralité de modèles de canal, une première position par rapport au bâtiment, à déterminer, à l'aide d'un deuxième modèle de canal de la pluralité de modèles de canal, une deuxième position par rapport au bâtiment, et à déterminer, sur base d'une vérification de plausibilité de la première et de la deuxième position, un espace par rapport au plan horizontal du bâtiment dans lequel se trouve le dispositif de navigation mobile.

2. Dispositif de navigation mobile selon la revendication 1,
dans lequel la pluralité de modèles de canal (58) tiennent compte de propriétés de propagation du signal radioélectrique dans un matériau que présente le bâtiment.

3. Dispositif de navigation mobile selon la revendication 1 ou 2, dans lequel le réseau de radiocommunication cellulaire présente une pluralité de stations de base (21, 22, 23), chaque station de base étant disposée en une position prédéterminée et présentant une identification de station de base propre, et
le dispositif de navigation mobile présentant, par ailleurs, une mémoire dans laquelle est mémorisée la position prédéterminée de la station de base en association avec l'identification de station de base de chaque station de base, et
dans lequel le dispositif (56) destiné à calculer est disposé de manière à calculer, à l'aide de signaux radioélectriques de la pluralité de stations de base, des coordonnées locales du dispositif de navigation.

4. Dispositif de navigation mobile selon l'une des revendications précédentes,
dans lequel la caractéristique de radiocommunication (58) présente un diagramme d'antennes et une intensité de champ d'émission de la station de base.

5. Dispositif de navigation mobile selon l'une des revendications précédentes,
dans lequel le réseau de radiocommunication cellulaire est un réseau de radiocommunication synchrone dans lequel les stations de base présentes présentent un rapport fixe entre elles dans le temps et/ou en fréquence, et
dans lequel le récepteur (50) est disposé de manière à recevoir des signaux radioélectriques des stations de base en connaissance du rapport fixe.

6. Dispositif de navigation mobile selon la revendication 5, dans lequel le réseau de radiocommunication cellulaire est un réseau de radiocommunication selon la norme DECT ou un dérivé de celle-ci.

7. Dispositif de navigation mobile selon l'une des revendications 2 à 6,
dans lequel la pluralité de modèles de canal sont paramétrés, un paramètre étant un nombre et/ou un matériau de parois intérieures du bâtiment.

8. Dispositif de navigation mobile selon l'une des revendications précédentes, présentant, par ailleurs, un module de positionnement qui effectue, à l'aide de procédés récurrents et/ou heuristiques, un calcul de position continu.

9. Dispositif de navigation mobile selon la revendication 8,
dans lequel le module de positionnement présente un filtre de Kalman.

10. Dispositif de navigation mobile selon l'une des revendications 2 à 9, présentant, par ailleurs, un module d'optimisation qui est disposé de manière à effectuer, à l'aide des données de plan horizontal du bâtiment (14), une vérification de plausibilité des informations sur la position du dispositif de navigation mobile.

11. Dispositif de navigation mobile selon l'une des revendications précédentes, présentant, par ailleurs, une interface d'utilisateur destinée à générer et à sortir, à l'aide des informations sur la position du dispositif de navigation mobile, des informations auxiliaires pour l'utilisateur.

12. Dispositif de navigation mobile selon l'une des revendications précédentes,
dans lequel le récepteur (50) présente une pluralité d'antennes, et
dans lequel le dispositif (56) destiné à calculer la distance est disposé de manière à utiliser des signaux radioélectriques de la même station de base reçus par l'intermédiaire de la pluralité d'antennes.

13. Dispositif de navigation mobile selon l'une des revendications précédentes,
dans lequel le réseau de radiocommunication cellulaire est disposé de manière à mettre à disposition, par l'intermédiaire d'au moins un émetteur de référence du dispositif de navigation mobile, des informations sur un trajet de radiocommunication entre une station de base et le dispositif de navigation, et
dans lequel le récepteur (50) est disposé de manière à recevoir les informations, et
dans lequel le dispositif (56) destiné à calculer tient compte des informations.

14. Dispositif de navigation mobile selon l'une des revendications précédentes, présentant, par ailleurs, un capteur d'accélération, et
dans lequel le dispositif destiné à calculer (56) est disposé de manière à tenir compte, pour les informations sur la position, d'un signal de sortie du capteur d'accélération.

15. Dispositif de navigation mobile selon l'une des revendications précédentes, présentant, par ailleurs, un compas.

16. Dispositif de navigation mobile selon l'une des revendications précédentes,
dans lequel le récepteur (50) est disposé de manière à recevoir des signaux radioélectriques d'au moins deux réseaux de radiocommunication cellulaires qui fonctionnent selon une spécification différente.

17. Dispositif de navigation mobile selon l'une des revendications précédentes, qui est disposé de manière à fonctionner de manière purement passive, sans émission de signaux radioélectriques propres.

18. Dispositif de navigation mobile selon l'une des revendications précédentes, dans lequel la caractéristique de radiocommunication de la station de base et les modèles de canal sont mémorisés dans le dispositif de navigation mobile ou sont mis à disposition de manière adaptive au moyen d'une interface de transmission de données.

19. Procédé pour fournir des informations de navigation dans un réseau de radiocommunication cellulaire qui est disposé dans et/ou autour d'un bâtiment (14) et qui présente au moins une station de base (21, 22, 23) avec une identification de station de base (ID1, ID2, ID3), la station de base étant disposée en une position prédéterminée, aux étapes suivantes consistant à :
recevoir (50) un signal radioélectrique avec une intensité de champ électrique qui présente l'identification de station de base ;
déterminer (52) la position prédéterminée de la station de base sur base de l'identification de station de base ;
mesurer (54) l'intensité de champ du signal radioélectrique;
calculer (56) une distance du dispositif de navigation mobile par rapport à la station de base, pour obtenir, à l'aide de la position prédéterminée de la station de base, des informations sur la position du dispositif de navigation mobile,
une caractéristique de radiocommunication de la station de base, des informations sur un plan horizontal du bâtiment et une pluralité de modèles de canal qui décrivent les propriétés de transmission du signal radioélectrique dans les environs de la station de base pour différentes positions du dispositif de navigation mobile par rapport au bâtiment défini par le plan horizontal étant pris en compte à l'étape de calcul de la distance, la caractéristique de radiocommunication de la station de base et le modèle de canal étant prédéterminés, et
à l'étape de calcul de la distance étant déterminée, à l'aide d'un premier modèle de canal de la pluralité de modèles de canal, une première position par rapport au bâtiment, à l'aide d'un deuxième modèle de canal de la pluralité de modèles de canal étant déterminée une deuxième position par rapport au bâtiment, et sur base d'une vérification de plausibilité de la première et de la deuxième position étant déterminé un espace par rapport au plan horizontal du bâtiment dans lequel se trouve le dispositif de navigation mobile.
